# EUROPÄISCHE PATENTSCHRIFT

(11) **EP 1 147 157 B1**
(45) Veröffentlichungstag und Bekanntmachung des Hinweises auf die Patenterteilung: **20.04.2005**
(21) Anmeldenummer: 00987014.8
(22) Anmeldetag: 24.10.2000
(51) Int. Cl.: C09J 197/00, C09J 197/02, C08L 97/02

(54) **VERFAHREN ZUR HERSTELLUNG EINES BINDEMITTELS**
METHOD FOR PRODUCING A BINDER
PROCEDE DE PREPARATION D'UN LIANT

(30) Priorität: 10.11.1999 DE 19953896
(43) Veröffentlichungstag der Anmeldung: 24.10.2001
(73) Patentinhaber: Fraunhofer-Gesellschaft zur Förderung der angewandten Forschung e.V., 80686 München (DE)
(72) Erfinder: DIX, Brigitte, 38102 Braunschweig (DE); LOTH, Fritz, 14513 Teltow (DE); ROFFAEL, Edmone, 38104 Braunschweig (DE)
(74) Vertreter: Gramm, Werner, Prof. Dipl.-Ing.
(86) Internationale Anmeldenummer: PCT/DE2000/003737
(87) Internationale Veröffentlichungsnummer: WO 2001/034720

(56) Entgegenhaltungen:
- DATABASE WPI Week 199322 Derwent Publications Ltd., London, GB; AN 1993-176054 XP002162465 "Adhesive with high efficiency and low cost - prepd. from powdered larch bark" & CN 1 064 694 A (JILIN FORESTRY COLLEGE), 23. September 1992 (1992-09-23)
- DATABASE WPI Week 199531 Derwent Publications Ltd., London, GB; AN 1995-232276 XP002162466 "Adhesive prepn. from coniferous tree bark" & CN 1 088 243 A (FUJIAN FORESTRY COLLEGE) , 22. Juni 1994 (1994-06-22)

## Beschreibung

Die Erfindung betrifft ein Verfahren zur Herstellung einer Bindemittelflotte insbesondere für die Furnier-, Faser- oder Spänebeleimung bei der Herstellung von Holzwerkstoffen.

Der Erfindung liegt die Aufgabe zugrunde, für den genannten Einsatz ein preiswertes und umweltfreundliches Bindemittel zu entwickeln.

Ausgehend von dem eingangs genannten Verfahren wird diese Aufgabe erfindungsgemäß dadurch gelöst, dass Nadelholzrinden, insbesondere Fichtenrinde, fein gemahlen in Wasser oder wässrigen Lösungen dispergiert und dann in einem Jet-Kocher mit Wasserdampf aufheizt und durch Hindurchpressen durch eine Rohrschleife unter erhöhtem Druck zu einer gebrauchsfähigen Bindemittelflotte aufgeschlossen werden.

Erfindungsgemäß wird somit eine Bindemittelflotte aus nachwachsenden Rohstoffen hergestellt, nämlich aus tanninreichen Rinden. Dabei lässt sich die erfindungsgemäße Bindemittelflotte nicht nur bei der Herstellung von Holzwerkstoffen, sondern auch für die Herstellung von nicht lignocellulosischen Materialien wie z.B. Schäumen oder Keramik einsetzen.

Fichtenrinde fällt im Rahmen der Holzverwertung in der Zellstoff-, Säge-, Faserplatten- und Spanplattenindustrie konzentriert an. Hiervon werden bisher etwa ein Drittel energetisch genutzt und zwei Drittel im Bereich des Garten- und Landschaftsbaus verwendet. Auch andere tanninhaltige Rinden fallen in der Holzindustrie an, wenn auch in kleineren Mengen.

Es wurde nun überraschend gefunden, dass sich Rinden, wenn sie fein gemahlen werden, im Jet-Kocher-Verfahren aufschließen lassen, wobei sich die so erhaltene Bindemittelflotte als alleiniges Bindemittel oder aber als Bindemittelzusatz bei der Herstellung von Holzwerkstoffen einsetzen lässt.

Durch das erfindungsgemäße Verfahren lässt sich die gesamte Rinde stofflich verwerten. Im Gegensatz hierzu werden bei der konventionellen Tannin-Gewinnung aus Rinden durch Extraktion mit Wasser oder wässrigen Lösungsmitteln und darauf folgende Sprühtrocknung der Extrakte in der Regel nur 20 - 25 % der Rinden verwertet, während der Rückstand entsorgt werden muss.

Da üblicherweise bei der Herstellung von Spanplatten und mitteldichten Faserplatten entrindete Hackschnitzel eingesetzt werden, fällt die Rinde somit bei dem Holzwerkstoffhersteller vor Ort konzentriert an. Üblicherweise sind bei den Holzwerkstoffherstellern auch Gerätschaften für die Aufbereitung der Rinde vorhanden; ferner verfügen einige Spanplattenund MDF-Hersteller über einen Überschuss an Energie, die dann bei Durchführung des erfindungsgemäßen Verfahrens für das Betreiben des Jet-Kochers genutzt werden kann. Bei der erfindungsgemäßen vollständigen Verwertung der gesamten Rinde lassen sich auch gegebenenfalls vorhandene weitere Inhaltsstoffe (z.B. hydrophobe Inhaltsstoffe wie Wachse) für die Holzwerkstoffe nutzen.

Die erfindungsgemäß hergestellten Bindemittel aus einheimischen nachwachsenden Rohstoffen sind preiswerter als bisherige Bindemittel auf Basis importierter Tannine.

Es kann zweckmäßig sein, wenn die fein gemahlenen Rinden zusammen mit Stärke dispergiert und dann gemeinsam in einem Verfahrensschritt aufgeschlossen werden, wobei sich insbesondere die Verwendung nativer Stärken empfiehlt, die preiswerter sind als modifizierte Stärken. Auch die so erhaltene Rinden-Stärke-Dispersion eignet sich als alleiniges Bindemittel oder aber auch als Bindemittelzusatz für die Herstellung von Holzwerkstoffen. Erfindungsgemäß werden bei diesem weiterentwickelten Verfahren also die Rinden und Stärken in einem "Eintopf-Verfahren" aufgeschlossen, so dass die Herstellung des Bindemittels in einem Schritt erfolgen kann. Das so aus Stärke und Rinde in einem Schritt hergestellte Bindemittel basiert somit vollständig auf einheimischen nachwachsenden Rohstoffen.

Um die Formaldehydabgabe der hergestellten Platten oder dergleichen zu verringern, ist es vorteilhaft, wenn der Bindemittelflotte Harnstoff beigegeben wird.

## Patentansprüche

1. Verfahren zur Herstellung einer Bindemittelflotte insbesondere für die Furnier-, Faser- oder Spänebeleimung bei der Herstellung von Holzwerkstoffen, **dadurch gekennzeichnet, dass** Nadelholzrinden, insbesondere Fichtenrinde, fein gemahlen in Wasser oder wässrigen Lösungen dispergiert und dann in einem Jet-Kocher mit Wasserdampf aufheizt und durch Hindurchpressen durch eine Rohrschleife unter erhöhtem Druck zu einer gebrauchsfähigen Bindemittelflotte aufgeschlossen werden.

2. Verfahren nach Anspruch 1, **dadurch gekennzeichnet, dass** die fein gemahlenen Rinden zusammen mit Stärke dispergiert und dann gemeinsam in einem Verfahrensschritt aufgeschlossen werden.

3. Verfahren nach Anspruch 2, **gekennzeichnet durch** Verwendung nativer Stärken.

4. Verfahren nach Anspruch 1, 2 oder 3, **dadurch gekennzeichnet, dass** der Bindemittelflotte Harnstoff beigegeben wird.

## Claims

1. Process for the preparation of a binder liquor, in particular for gluing veneers, fibres or chips in the production of wood-base materials, **characterized in that** softwood barks, in particular spruce bark, are dispersed in water or aqueous solutions in finely ground form and then heated with steam in a jet digester and digested by forcing through a pipe coil under elevated pressure to give a ready-to-use binder liquor.

2. Process according to Claim 1, **characterized in that** the finely ground bark are dispersed together with starch and then digested together in one process step.

3. Process according to Claim 2, **characterized by** the use of natural starches.

4. Process according to Claim 1, 2 or 3, **characterized in that** urea is added to the binder liquor.

## Revendications

1. Procédé pour préparer un bain de liant, en particulier pour l'encollage de contreplaqué, de fibres ou de copeaux, lors de la fabrication de produits à base de bois, **caractérisé en ce que** des écorces de conifère, notamment des écorces de sapin, finement moulues sont dispersées dans l'eau ou des solutions aqueuses et sont ensuite chauffées avec de la vapeur d'eau dans un bouilleur à jet et mises sous forme de pulpe par pressage sous pression élevée à travers une boucle tubulaire pour obtenir un bain de liant utilisable.

2. Procédé selon la revendication 1, **caractérisé en ce que** les écorces finement moulues sont dispersées ensemble avec de l'amidon et sont mises sous forme de pulpe simultanément en une étape de procédé.

3. Procédé selon la revendication 2, **caractérisé par** l'utilisation d'amidon natif.

4. Procédé selon l'une des revendications 1, 2 ou 3, **caractérisé en ce qu'**on ajoute au bain de liant, de l'urée.
